# EUROPEAN PATENT APPLICATION

(11) **EP 2 343 922 A1**
(43) Date of publication of application: **13.07.2011**
(21) Application number: 10290010.7
(22) Date of filing: 11.01.2010
(51) Int. Cl.: H04W 36/14

(54) **Enhancement of single radio voice call continuity mobility**

(71) Applicant: Alcatel Lucent, 75008 Paris (FR)
(72) Inventor: Bennett, Andy, SN254ZN Swindon, Wiltshire (GB); Ejzak, Richard Paul, 60189 Wheaton, Illinois (US)
(74) Representative: El Manouni, Josiane

(57) **Abstract**

One object of the present invention is a method for enhancement of Single Radio Voice Call Continuity SRVCC mobility, SRVCC mobility including handover procedure and session transfer procedure, handover procedure including instructing a User Equipment UE to perform a handover, said method comprising a step of:
- triggering said instructing of UE to perform a handover, by the detection of first media sent towards said UE after session transfer procedure initiation.

## Description

The present invention generally relates to mobile communication networks and systems.

Detailed descriptions of mobile communication networks and systems can be found in the literature, in particular in Technical Specifications published by standardisation bodies such as in particular 3GPP (3^{rd} Generation Partnership Project).

Single Radio Voice Call Continuity SRVCC is specified in particular in 3GPP TS 23.216 specification. SRVCC provides voice call continuity between IP Multimedia Subsystem IMS over Packet Switched PS access and Circuit Switched CS access for calls that are anchored in IMS when the User Equipment UE is capable of transmitting/receiving on only one of those access networks at a given time.

3GPP TS 23.216 specifies SRVCC between E-UTRAN access and 3GPP2's 1xCS, and between E-UTRAN access and 3GPP's UTRAN/GERAN accesses and between UTRAN (HSPA) access and 3GPP's UTRAN/GERAN accesses, for CS calls that are anchored in the IP Multimedia Subsystem IMS. The present invention addresses SRVCC between E-UTRAN access and 3GPP's UTRAN/GERAN accesses and between UTRAN (HSPA) access and 3GPP's UTRAN/GERAN accesses.

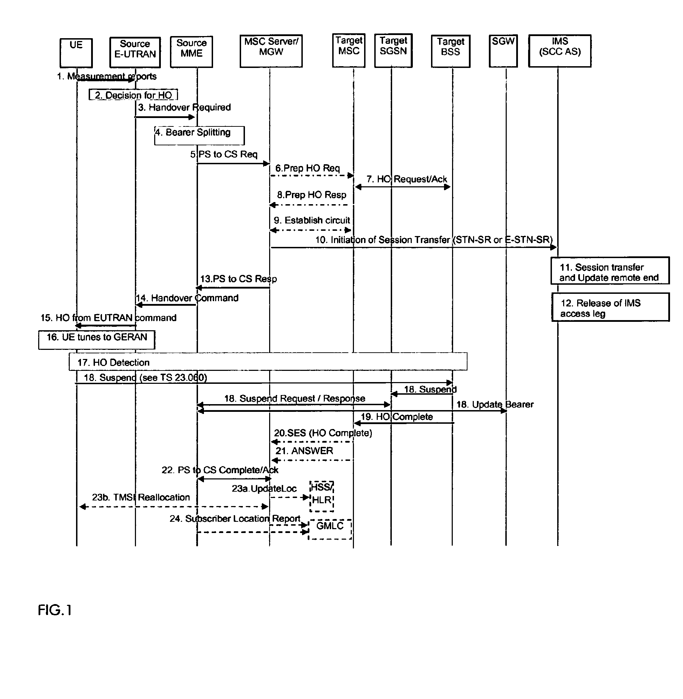

For example, SRVCC from E-UTRAN to GERAN procedure, as specified in 3GPP TS 23.216, is recalled in figure 1.

Generally, there is a need to improve SRVCC functionality, for example such as specified in 3GPP TS 23.216. In particular, there is a need to reduce flow or communication breaks occurring during SRVCC mobility procedures, as will be described with more detail later in the description. Such flow or communication breaks are very badly perceived by end users; there is a need to improve end user experience or quality of service as perceived by end users.

The present invention in particular addresses such needs.

These and other objects are achieved, in one aspect of the present invention, in an embodiment, by a method for enhancement of Single Radio Voice Call Continuity SRVCC mobility, SRVCC mobility including handover procedure and session transfer procedure, handover procedure including instructing a User Equipment UE to perform a handover, said method comprising a step of:
- triggering said instructing of UE to perform a handover, by the detection of first media sent towards said UE after session transfer procedure initiation.

These and other objects are achieved in other aspects of the present invention, by entities comprising means for carrying out such method (said entities including network entities such as in particular entities of CS Core Network, such as in particular MSC Server enhanced for SRVCC, and associated Media Gateway MGW).

Some embodiments of apparatus and/or methods in accordance with embodiments of the present invention are now described, by way of example only, and with reference to the accompanying drawings, in which:
- figure 1 is intended to recall SRVCC procedure such as for example SRVCC from E-UTRAN to GERAN procedure, as specified in 3GPP TS 23.216 specification,
- figure 2 is intended to illustrate a simplified SRVCC architecture,
- figure 3 is intended to illustrate flow breaks occurring during a SRVCC mobility procedure, according to a possible solution having some drawbacks that embodiments of the present invention enable to avoid,
- figure 4 is intended to illustrate flow breaks occurring during a SRVCC mobility procedure, according to an embodiment of the present invention,
- figure 5 is intended to illustrate flow breaks occurring during a SRVCC mobility procedure, according to another embodiment of the present invention.

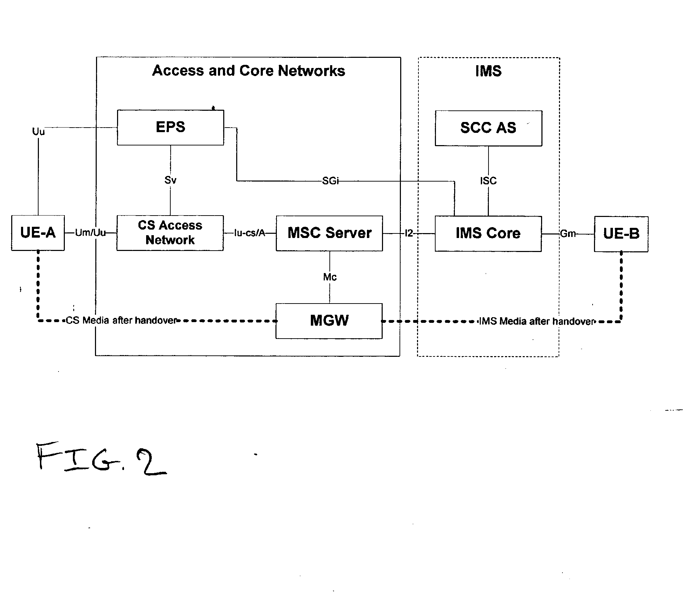

A simplified representation of the SRVCC architecture is illustrated in figure 2.

A voice call between a User Equipment UE enhanced for SRVCC (referred to as UE-A) and a remote User Equipment UE (referred to as UE-B) is anchored in the IMS, a Service Centralization and Continuity Application Server SCC AS being inserted in the call control signalling path in the IMS.

UE-A has access to the IMS via Access and Core Networks including:
- PS Access and Core Network, such as Evolved Packet System EPS, connected to IMS,
- CS Access Network connected to IMS via CS Core Network, CS Core Network including MSC Server enhanced for SRVCC associated with Media Gateway MGW.

When UE-A is under PS Access coverage, media transported to/from UE-A over EPS and IMS will be referred to as DL/UL PS media (where DL stands for Downlink and UL stands for Uplink).

When UE-A is under CS Access coverage, media transported to/from UE-A over CS Access Network, CS Core Network and IMS will be referred to as DL/UL CS media.

When UE-A is under CS Access coverage (such as in particular after handover from PS Access to CS Access):
- the call control signalling path includes MSC Server,
- the path followed by CS media includes MGW, this path being illustrated with dotted lines in figure 2.

Embodiments of the present invention that will be described hereinafter are based in particular on the following ideas.

SRVCC mobility procedure can be considered as comprising handover procedure (including steps such as steps 1 to 9 and 13 to 17 illustrated in figure 1) and VCC or session transfer procedure (including steps such as steps 10 to 12 illustrated in figure 1). Handover procedure can be considered as comprising handover preparation procedure (including steps such as steps 1 to 9 illustrated in figure 1) and handover execution procedure (including steps such as steps 13 to 17 illustrated in figure 1).

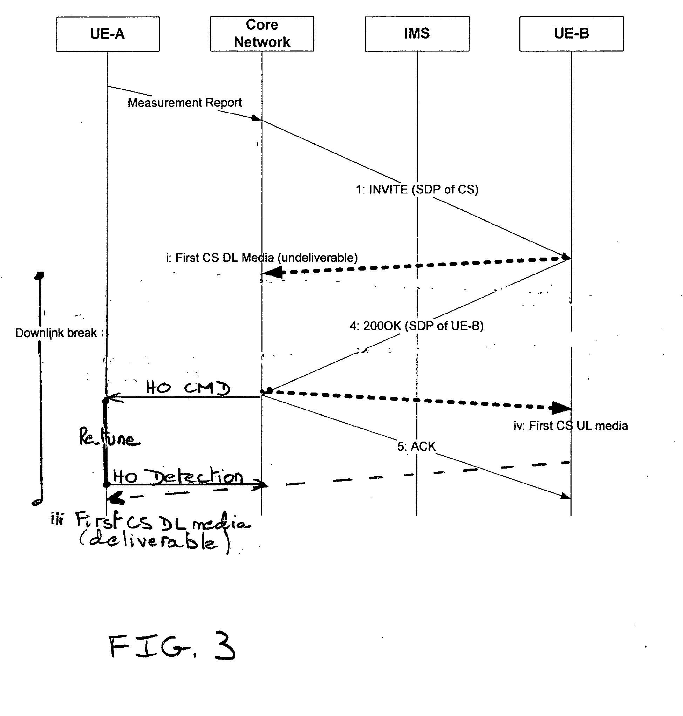

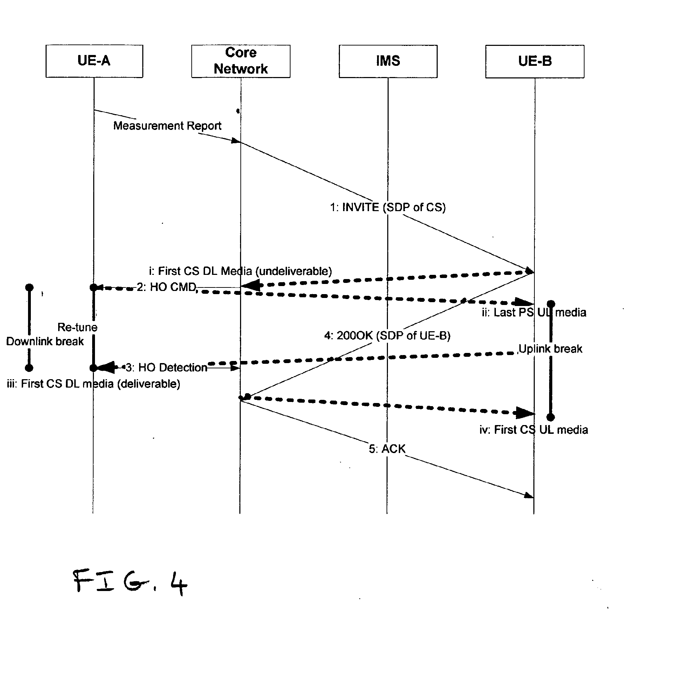

Figures 3 and 4 are intended to illustrate flow breaks occurring during a SRVCC mobility procedure.

Handover procedure in the simplified SRVCC mobility procedure illustrated in figures 3 and 4 includes the following steps:
- UE-A sending measurement reports to PS Access Network,
- Handover Command HO CMD sent to UE-A via Core Network and PS Access Network,
- UE-A re-tuning to CS Access Network,
- Handover Detection HO Detection sent to CS Access Network from UE-A via PS Access Network and CS Core Network.

A Handover Command (instructing a UE to perform a handover) to be sent on the radio interface between the UE and the network, is built by the Target RAN and sent to the UE while the UE is still in the Source RAN (the Handover Command being carried transparently in messages sent to the UE via the Source RAN). The Handover Command contains information needed for access via the Target RAN.

For example, in the case of SRVCC from E-UTRAN to GERAN mobility as illustrated in figure 1, a HO command is built by the Target BSS and carried transparently in the following messages:
- "Handover Request ACK" sent in step 7 by Target BSS to Target MSC,
- "Prep HO Response" sent in step 8 by Target MSC to MSC Server,
- "SRVCC PS to CS Response" sent in step 13 by MSC Server to Source MME in EPS,
- "Handover Command" sent in step 14 by Source MME to Source E-UTRAN,
- "HO from EUTRAN command" sent in step 15 by Source E-UTRAN to UE.

The receipt of the handover command triggers the handover or switching between PS and CS access.

The sending of a Handover Detection indicates the completion of the handover or switching between PS and CS Access.

Session Transfer procedure in the simplified SRVCC mobility procedure as illustrated in figures 3 and 4 includes the following steps:
- a SIP INVITE is sent to UE-B via IMS Core Network,
- a SIP 200 OK is sent from UE-B via IMS Core Network,
- a SIP ACK is sent to UE-B via IMS Core Network.

The SIP INVITE in particular includes a SDP offer (referred to as SDP of CS) including CS media transport parameters, such as in particular IP address of MGW.

The SIP 200 OK in particular includes a SDP answer (referred to as SDP of UE-B) including IMS media transport parameters associated with the downlink CS media, such as in particular IP address of UE-B.

Figure 3 is intended to illustrate flow breaks occurring during a SRVCC mobility procedure, according to a possible solution having some drawbacks that embodiments of the present invention enable to avoid.

The INVITE (1) received by UE-B causes that device to switch from PS to CS media and the first CS media packets are sent towards UE-A. Flow (i) shows these first media packets arriving shortly afterwards at the Core Network. At this point, the voice break experienced by UE-A will begin, since the core network is unable to deliver the CS media packets to UE-A until the handover to CS access is complete. When UE-A successfully re-tunes it is now able to receive downlink CS media packets (iii) and the voice break experienced by UE-A ends.

In a solution such as illustrated in figure 3, the SRVCC mobility procedure waits for the arrival of the 2000K response from the far party UE before initiating signalling towards the UE to instruct it to handover. However, as illustrated in figure 3, the voice break experienced by the SRVCC UE (UE-A) user begins when the INVITE arrives at the far party UE (UE-B). This means that the voice break is strongly linked to the time taken for the 2000K to travel from the far party UE. In roaming cases, or when the network is experiencing peak traffic this will be much greater than 200ms, and when added to the (at least) 100ms re-tune time of the UE means that the voice break experienced is much greater than 300ms.

Embodiments of the present invention in particular avoid such drawbacks.

In an embodiment of the present invention, the signalling to instruct the SRVCC UE to perform a handover is triggered by the arrival of media from the far party UE, since this will happen before the arrival of the 200OK from the far party UE (which triggers handover in a SRVCC mobility procedure such as illustrated in figure 3).

In an embodiment of the present invention, the triggering of the instruction to the SRVCC UE (UE-A) to handover occurs when the first media (i) from the far party UE (UE-B) arrives at the Media Gateway (MGW) associated with the MSC Server. Since the media will arrive before the signalling (due to processing delays for the signalling) the handover can be triggered before it would be in the existing procedures, and thus reduce the voice break experienced by the SRVCC user.

In an embodiment of the present invention, it is proposed to add the capability to the MGW to report to the MSC Server that the first media from UE-B has arrived.

In an embodiment of the present invention, rather than the handover commend (HO CMD) being triggered by the arrival of the 2000K, it is triggered when the Media Gateway (MGW) reports the arrival of the first media to the MSC Server. If no media is detected by the MGW by the time the 2000K arrives then the handover command will be sent at that time. This does not impact the voice break experienced since if there is no media then there are no voice packets to deliver.

The term "first media" referred to in embodiments of the present invention should not be interpreted in a restricted way. For example, it covers background noise or artificial noise such as comfort noise generated in the absence of voice activity.

Figure 4 is intended to illustrate flow breaks occurring during a SRVCC mobility procedure, according to an embodiment of the present invention.

The slope of the lines indicates the time taken for the media and signalling to traverse the network. The time taken for the signalling to traverse the network is significantly longer that that taken by the media, and this difference in traversal time is exploited by embodiments of the present invention.

The INVITE (1) received by UE-B causes that device to switch from PS to CS media and the first CS media packets are sent towards UE-A. Flow (i) shows these first media packets arriving shortly afterwards at the Core Network. It is this arrival of media packets that in an embodiment of the present invention causes the MGW to signal to the MSC Server to send the handover command (2) towards UE-A. (Note that the packetization duration of 20ms means that the voice break indications shown in Figure 2 do not exactly coincide with the arrival of the media, but for clarity this is not shown.)

At this point, the voice break experienced by UE-A will begin, since the core network is unable to deliver the CS media packets to UE-A until the handover to CS access is complete. At the same time, the start of the handover procedures means that no further uplink PS media packets will be sent towards UE-B and so the arrival of the last uplink PS media packets (ii) at UE-B marks the beginning of the voice break experienced by that device. When UE-A successfully re-tunes it is now able to receive downlink CS media packets (iii) and the voice break experienced by UE-A ends. Once the core network receives the 2000K (4) uplink CS media packets can be sent towards UE-B, and the arrival of these media packets (iv)at UE-B marks the end of the voice break experienced by that device.

The total voice break time experienced by UE-A begins when the last PS media arrives from UE-B (shortly after the INVITE arrives at UE-B), and ends when handover is detected and CS media can be delivered to UE-A. The break time experienced by UE-A is shorter in figure 4 than in figure 3 since the handover is initiated as soon as the core network is aware that there are CS media packets to be delivered to UE-A, rather than waiting for the arrival of the 2000K (4). It is earlier by the additional time it takes the signalling (ie the 2000K) to be processed in the intervening network nodes, compared with the time it takes for the media to be transported. This will be between 100ms and 300ms depending on whether UE-B is in a different network to the HPLMN of UE-A, or if UE-A is roaming (or both), or the network nodes are experiencing peak traffic through them.

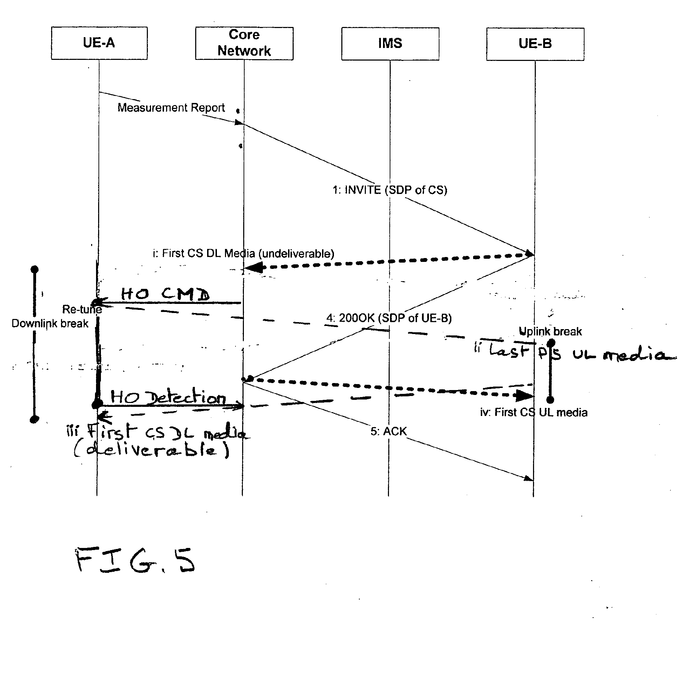

In another embodiment of the invention as illustrated in figure 5, the duration of the break experienced by UE-B can be reduced by adding a delay between the detection of CS media by the MGW and the MSC Server sending the handover command. This has the effect of increasing the voice break at UE-A, but by selecting an appropriate delay value an appropriate balance between the two voice breaks can be achieved.

In an embodiment, there is provided a method for enhancement of Single Radio Voice Call Continuity SRVCC mobility, SRVCC mobility including handover procedure and session transfer procedure, handover procedure including instructing a User Equipment UE to perform a handover, said method comprising a step of:
- triggering said instructing of UE to perform a handover, by the detection of first media sent towards said UE after session transfer procedure initiation.

In an embodiment, said method comprises the steps of:
- a Media Gateway MGW detecting said first media sent towards said UE after session transfer procedure initiation,
- said MGW reporting said detection to a MSC Server.
   In an embodiment, said method comprises a step of:
- a MSC Server triggering said instructing of UE to perform a handover, upon reporting by a Media Gateway MGW of the detection of first media sent towards said UE after session transfer procedure initiation.

In an embodiment, said method comprises a step of:
- introducing a delay between said detection of first media sent towards said UE after session transfer procedure initiation and said triggering said instructing of UE to perform a handover.

In an embodiment, said method comprises a step of:
- said MGW introducing a delay before said reporting.
   In an embodiment, said method comprises a step of:
- said MSC Server introducing a delay before said triggering.

There are provided entities comprising means for carrying out such method (said entities including network entities such as in particular entities of CS Core Network, such as in particular MSC Server enhanced for SRVCC, and associated Media Gateway MGW).

In an embodiment, there is provided a Media Gateway MGW comprising:
- means for detecting first media sent towards a User Equipment UE after session transfer procedure initiation during SRVCC mobility procedure,
- means for reporting said detection to a MSC Server.
   In an embodiment, said MGW comprises:
- means for introducing a delay before said reporting.
   In an embodiment, there is provided a MSC Server comprising:
- means for triggering instructing of a User Equipment UE to perform a handover during SRVCC mobility procedure, upon reporting by a Media Gateway MGW of the detection of first media sent towards said UE after session transfer procedure initiation during said SRVCC mobility procedure.

In an embodiment, said MSC Server comprises:
- means for introducing a delay before said triggering.

The detailed implementation of the above-mentioned means does not raise any special problem for a person skilled in the art, and therefore such means do not need to be more fully disclosed than has been made above, by their function, for a person skilled in the art.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for enhancement of Single Radio Voice Call Continuity SRVCC mobility, SRVCC mobility including handover procedure and session transfer procedure, handover procedure including instructing a User Equipment UE to perform a handover, said method comprising a step of:
- triggering said instructing of UE to perform a handover, by the detection of first media sent towards said UE after session transfer procedure initiation.

2. A method according to claim 1, comprising the steps of:
- a Media Gateway MGW detecting said first media sent towards said UE after session transfer procedure initiation,
- said MGW reporting said detection to a MSC Server.

3. A method according to claim 1 or 2, comprising a step of:
- a MSC Server triggering said instructing of UE to perform a handover, upon reporting by a Media Gateway MGW of the detection of first media sent towards said UE after session transfer procedure initiation.

4. A method according to any of claims 1 to 3, comprising a step of:
- introducing a delay between said detection of first media sent towards said UE after session transfer procedure initiation and said triggering said instructing of UE to perform a handover.

5. A method according to claim 2, comprising a step of:
- said MGW introducing a delay before said reporting.

6. A method according to claim 3, comprising a step of:
- said MSC Server introducing a delay before said triggering.

7. A Media Gateway MGW comprising:
- means for detecting first media sent towards a User Equipment UE after session transfer procedure initiation during SRVCC mobility procedure,
- means for reporting said detection to a MSC Server.

8. A MGW according to claim 7, comprising:
- means for introducing a delay before said reporting.

9. A MSC Server comprising:
- means for triggering instructing of a User Equipment UE to perform a handover during SRVCC mobility procedure, upon reporting by a Media Gateway MGW of the detection of first media sent towards said UE after session transfer procedure initiation during said SRVCC mobility procedure.

10. A MSC Server according to claim 9, comprising:
- means for introducing a delay before said triggering.
